# EUROPEAN PATENT SPECIFICATION

(11) **EP 2 043 320 B1**
(45) Date of publication and mention of the grant of the patent: **09.12.2009**
(21) Application number: 07117481.7
(22) Date of filing: 28.09.2007
(51) Int. Cl.: H04L 29/06

(54) **Method and system for automatic and remote server provisioning using virtual machine appliances**
Verfahren und System zur automatischen Remote-Bereitstellung eines Servers über virtuelle Geräteanwendungen
Procédé et système pour la fourniture de serveur automatique et à distance à l'aide d'appareil de machines virtuelles

(43) Date of publication of application: 01.04.2009
(73) Proprietor: Zimory GmbH, 10243 Berlin (DE)
(72) Inventor: Kotsovinos, Evangelos, London SW1P 4DA (GB)
(74) Representative: Vossius & Partner

(56) References cited:
- US-A1- 2005 198 629

## Description

### FIELD OF THE INVENTION

The present invention relates to a method and a system for server provisioning, in particular, to a method and a system for automatic and remote server provisioning using virtual machine appliances.

### BACKGROUND OF THE INVENTION

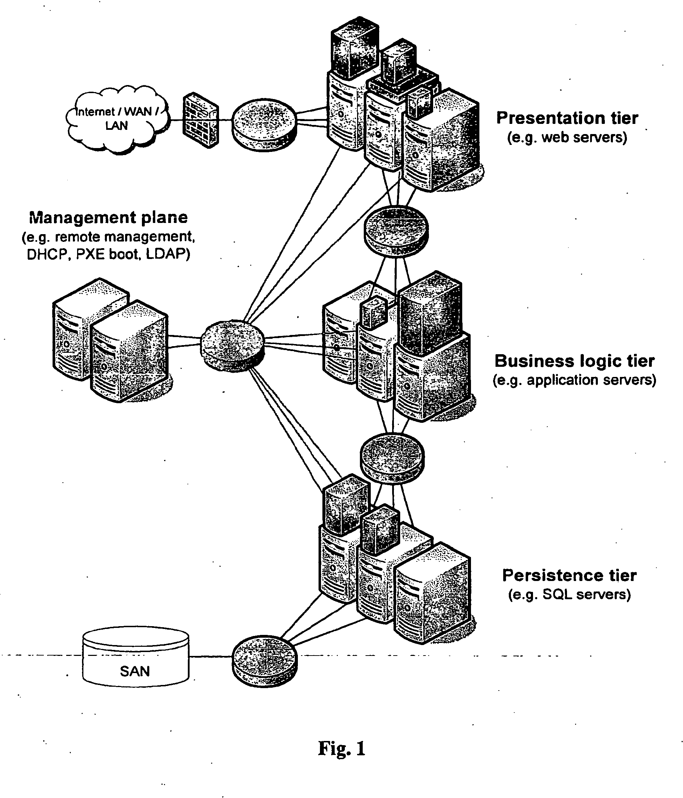

Modem data centres comprise large numbers of interconnected servers, which may run different applications and operating systems on behalf of internal or external customers. The servers may be organised in tiers denoting groups of servers that serve specific purposes. An exemplary 3-tier data centre structure is shown in Figure 1.

As shown in Figure 1, each server may often be designated to perform one or more specific functions, e.g. to run web server, application server or database server. The task of setting up the desired operating system and application stack required on a server, in order to perform a certain function (e.g. web server), is called sever provisioning.

Server provisioning may take place in cases when new servers are added to the data centre, when servers are moved to a different tier, i.e., they are re-configured to change their function in the data centre, e.g. a web server becomes an application server, or when servers need to get disconnected and reconnected to the data centre, e.g., for hardware maintenance.

In conventional data centres, server provisioning is a laborious and time-consuming process, as the user has to connect to a server or a plurality of servers that need to be provisioned, and set up the required operating system, libraries and software packages. This represents a configuration push approach, as the user needs to use a server management software needs to determine the server to be provisioned, manually setup the server based on the functionality they are supposed to perform and start corresponding applications successively.

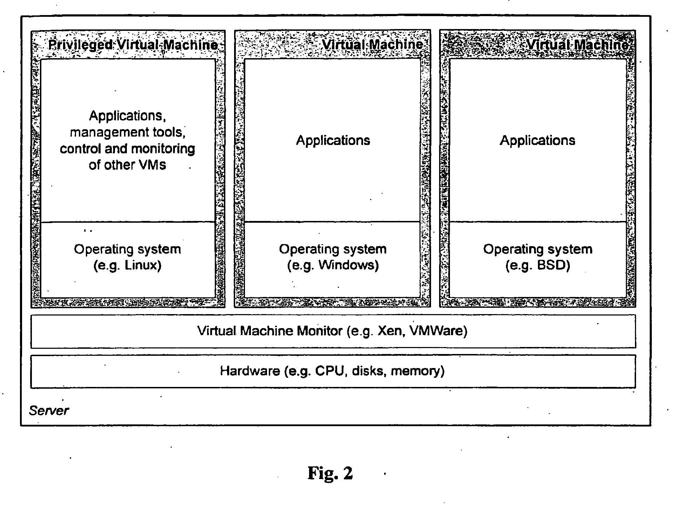

In modern data centres, virtualisation technology is widely used. It is based on a Virtual Machine Monitor (VMM) software component, which runs on the server hardware and virtualises physical resources. It allows running multiple instances of operating systems and their applications on the same physical server, on top of the VMM. Each operating system instance and its applications are said to be running within a Virtual Machine (VM). For exposition, a structure of a virtualised server is shown in Figure 2. VM Appliances are pre-configured instances of operating systems with pre-installed applications, which are tested and validated. They can be stored in a central or distributed storage system and given unique identifiers. They can be deployed on data centre servers on demand, in a short time, and through a convenient interface, e.g. web-based. Furthermore, stateful snapshots of Virtual Machines (originally created using VM appliances) may be taken at any time.

EP 07 01 4574.3 of the present applicant discloses a method and a system for creation and deployment of Virtual Machine appliances on virtualized servers. Particularly, it describes a method and a system for creating, managing, storing, and deploying VM appliances on a multitude of servers in a data centre. These are pre-configured instances of operating systems with pre-installed applications, which are tested and validated. They can be deployed on data centre servers on demand, in a short time, and through a convenient interface (web-based or otherwise), significantly reducing the time and complexity involved in the provisioning process. This method relates to a push approach, that is, the Virtual Machines need to be pushed to the servers from a central graphic user interface.

US-A1-2003/0126202 relates to a system and method for dynamic server allocation and provisioning. It describes a method and system that achieves provisioning of physical (i.e. not virtualised) servers using a custom boot-loader to retrieve and boot system images on servers from a central server in a local-area network, within a data centre. This method does not provide a solution for an automatic pull-based server provisioning. According to this document, an installation or a use of a custom boot loader is required, as the provisioning does not use virtualisation technology. Thus the flexibility of this method is limited within data centre.

US-A1-2002/0120868 relates to a method and apparatus for dynamic server provisioning. It describes a method and apparatus for dynamically adding command-processing capabilities to running data centre servers. It refers to a type of provisioning without using virtualisation technology, i.e., the entire stack of the operating system, server configurations and applications need to be applied to new servers successively.

US-B1-6,868,444 relates to a system for server configuration management and tracking. The system allows the dynamic configuration of applications on servers in a data centre from a central server. The solution stores application parameters on the central server and provides mechanisms for updating and retrieving these, and thus reconfiguring applications on the servers. This concerns servers that are already functional and running in the data centre, and provides a solution for configuring applications only.

US-A-2005/198629 describes a provisioning system that selects the appropriate action to take in provisioning a server computer by retrieving information on the build operators associated with a policy applied to the server retrieves state file information on state files associated with the build operator and selects the appropriate state file associated with the build operator based on the state value, the state value indicating the current stage of the provisioning process. Provisioning rules contained within the state file are selected based upon comparing criteria contained in the rule against the attributes of the server. An instruction set is extracted from the selected rule executed. The instructions within the instruction set may specify usine a vendor tool or performing other tasks in provisioning the server.

### SUMMARY OF THE INVENTION

It is an object of the invention to provide an improved method and a system for automatic and remote server provisioning. This object is achieved with the features of the claims.

According to the invention, automatic and remote server provisioning is provided using the technique of Virtual Machine appliances (VM appliances).

According to a first aspect, the present invention provides a method for automatic and remote server provisioning using VM appliances comprising steps of:
a) preparing a boot image and distributing it on a boot medium; and connecting the sever to a network and bootstrapping the server using the distributed boot image;
b) establishing a connection request by the server to a provisioning server over the network; retrieving an affinity information of the server for an existing virtual machine appliance in a predetermined appliance affinity table located on the provisioning server; and deploying the virtual machine appliance to the server according to the retrieved affinity information.

In a preferred embodiment, the boot image may comprise: a virtual machine monitor; a bootable root file system of a guest operation system distribution; an operating system kernel required for the guest operation system; an initial RAM disk required for the guest operating system; a virtual machine configuration information including parameters for starting up a virtual machine running the guest operating system; a provisioning daemon application configured to start automatically within the operating system distribution included in the bootable root file system.

In a preferred embodiment, the boot medium is located on one of the following apparatus: a boot server in a networked environment; a storage medium connected locally to the server.

In a preferred embodiment, the boot server may use DHCP or PXEboot as boot protocols for remote bootstrapping the server.

In a preferred embodiment, the connection request is being established by the provisioning daemon running on the server to a provisioning manager of the provisioning server.

In a preferred embodiment, the storage medium are CD-ROMs, DVD-ROMs or an attachable and detachable storage medium.

In a preferred embodiment, the server contacts provisioning server without an authentication, when both the server and the provisioning server are within a secure environment; and wherein the server contacts provisioning server with an authentication, when both the servers and the provisioning server are within a non-secure environment. Preferably, the authentication is an one time password issued to the server by the provisioning server. Alternatively, the authentication uses a certificate stored within the boot image.

In a preferred embodiment, the affinity information defines initial functionalities of the server, and is a value of the probability with which the server is assigned to run a certain appliance. Preferably, the appliance affinity table comprises a plurality of affinity information sets for servers. In a preferred embodiment, the affinity information within the affinity table can be modified using a user interface provided by the provisioning manager.

In a preferred embodiment, the step of deploying the server appliance may comprise the steps of: sending a virtual machine descriptor of the selected virtual machine appliance including a ticket to the server; and downloading the virtual machine configuration information required to start a virtual machine from the selected appliance; requesting the downloaded information and validating the ticket by the provisioning server; starting up the corresponding virtual machine after the virtual machine configuration information are downloaded to the server; and reporting the status of successfully deploying of the virtual machine appliance on the server by the provisioning server.

In a preferred embodiment, following is running on the server which is being provisioned after step a): the virtual machine monitor; the privileged virtual machine with a specified network configuration; and a provisioning daemon application running in the privileged virtual machine.

In a preferred embodiment, following is running on the server which is being provisioned after step b): the virtual machine monitor; the privileged virtual machine; a provisioning daemon application running in the privileged virtual machine; and the virtual machine hosting running applications.

In a preferred embodiment, the affinity information of the server needs to be modified prior moving the server to an other tier, and rebooting the server for re-provisioning by following preceding description.

In a preferred embodiment, the affinity information of the server needs to be modified prior to the server being shutdown for hardware maintenance, and rebooting the server for re-provisioning by following preceding description.

The present invention also relates to a system which is adapted to perform the above-mentioned method steps.

Virtualisation is of growing importance is the world of IT deployments, in particular in the fields of data centres and wide-area server infrastructures.

In the data centre virtualisation allows the consolidation of services in such a way as to provide the control and protection facilities normally associated with dedicated separate hardware (and software environments) without higher costs. As an example it may be wise to separate the publicly visible web server of a company from the internal intranet server hosting potentially valuable material. For security reasons these would often be deployed on separate physical machines to provide the appropriate protection environment however neither will use the full capacity of resources provided by the physical hardware. These two separate physical machines could be replaced by a single server running virtualisation software such as Xen or VMWare in order to provide a protection mechanism to effectively and securely separate the two services within their own virtual machines. The sharing of a single physical host is also helpful in reducing the cost of deploying services. This is the case both in terms of the saving in the initial cost of deployment by reducing the costs of hardware investment but also in the longer term by reducing the costs of hardware maintenance through features such as rapid VM deployment and live VM migration.

Moderndata centre environments are organised in tiers, where each server has a specific, well-defined, repeatable functionality to perform (e.g. web servers, application servers, storage servers). The presented invention allows centrally managing provisioning decisions such as which tier each server belongs to, which applications to deploy on each server, and how to apportion servers within a groups to the different tiers (this is made possible in an automatic way using the affinity scheme presented earlier). The invention also provides a pull model, where a server that gets connected into the network automatically retrieves its configuration, and deploys the applications it is meant to run within a virtual machine. As opposed to a push model (where an administrator pushes applications e.g. in the form of images to the new server) this has important benefits: it does not require manual action by the administrator, it ensures that servers are provisioned as soon as they enter the network (thus minimising resource waste), and it improves tier size balancing as well as ease of management. It is analogous to using DHCP to set up the network configuration of servers versus the traditional way of an administrator setting them up individually. DHCP has, expectedly, dominated the data centre environment.

Furthermore, the method and system according to the present invention allow re-provisioning servers from a central location (modify affinity and remote reboot), and dealing with expected or unexpected disconnection (and later reconnection) of servers to the data centre network. The pull model used in this solution provides ensures that all these operations may handled successfully through communication between the servers and the provisioning manager (initiated by the servers), without the requirement for manual intervention.

The present invention discloses a method and a system for allowing servers to, upon connection to the data centre network, automatically pull the application stack they are meant to run, in the form of virtual machine appliances.

The system comprises a central provisioning manager, where each server is associated with affinities to certain virtual machine appliances, thus defining the probability that the server will be provisioned as a server of a given tier. The provisioning manager provides interfaces for defining, updating, and monitoring the associations of servers and appliances. When a server connects to the network, it bootstraps, loads a local provisioning daemon, and communicates with the provisioning server to obtain and deploy its application stack in the form of a virtual machine.

The invention addresses one of the main challenges for modem data centres, which is related to increasing the speed and reducing the complexity of provisioning - in other words setting up new operating system and application environments on data centre servers to serve customer requirements.

Thus, the present invention makes use of virtualisation technology, in particular, VM appliances, and provides a pull-based solution to the server provisioning problem. The server, upon connection to the network, automatically discovers its function in the data centre, and subsequently obtains its configuration and starts the operating system and applications it needs to run.

The method and system according to the present invention allow an automatic provisioning of servers using VM appliances over a network. It represents a pull model of server provisioning, i.e., the server connects to the network and pulls the VMs it is meant to run.

Furthermore, the present invention provides means for associating servers or server groups with specific VM appliances using affinity values, which allow for a dynamic and automatic way of tier size balancing across the different data centre tiers.

Furthermore, the present invention does not require an installation or a use of a custom boot loader, as the provisioning is done by using virtualisation and VM appliance techniques: This provides a greater flexibility, and allows the use of standard system components as well as a dynamic and flexible tier size balancing in the data centre using the affinity concept.

Furthermore, the present invention allows setting up the entire stack of required operating system, applications and server configurations to bring a new server into a functional state in a data centre.

### BRIEF DESCRIPTION OF THE DRAWING

In the following, the present invention will be described in more detail with reference to the accompanying drawings, in which:
- Fig. 1: shows an exemplary 3-tier data centre structure;
- Fig. 2: shows an exemplary structure of a virtualised server; and
- Fig. 3: shows a preferred embodiment of provisioning of a new server according to the present invention.

### DETAILED DESCRIPTION OF PREFERRED EMBODIMENTS

For the description of the embodiments hereinafter, it is assumed that there is a central storage system where previously created VM appliances may be stored, and there is a deployment system that allows deploying a VM appliance on a virtualised server. The result of this is a Virtual Machine running on the server, which may be identical to the one described by the deployed VM appliance. The system needed to create, upload to the management server, store, and deploy VM appliances is described in more detail in EP 07 01 4574.3 of the present applicant which is incorporated herein by reference in its entirety.

The storage system and the deployment system may be hosted on a same physical server.

The architecture according the present invention may further comprise: a provisioning server for hosting a provisioning manager software, handling information about all servers and VM appliances available in a system, and maintaining information, e.g., which appliance is supposed to be run on which server and/or what the tier or function of each server is; and a provisioning manager providing an interfaces for associating Ethernet MAC addresses of server network interfaces with certain VM appliances or snapshots.

A server or a group of servers with certain MAC addresses may be defined by using the provisioning management software, to run a specific VM appliance with a predefined probability, e.g., server X runs an Apache Web Server. The provisioning management software further provides functions for changing the MAC address associated with a server, to allow a replacement of the server's network interface.

The provisioning server may be either within the data centre (in a local area network) or in a remote location (in the wide area network) accessible over the Internet.

There is a multitude of servers, which are virtualised, i.e. run a VMM and present a structure similar to the one shown in Figure 2, and which are provisioned centrally by a management server. An application, i.e., a provisioning daemon may run on each server to handle the provisioning of servers when they connect to the network, using the deployment of VM appliances.

The necessary VM appliances (e.g. "SAP on Windows Server 2003", "Apache web server and MySQL on SUSE Linux 10.2", "Application tier appliance") are created and stored in central or distributed storage using the method and system described in patent application EP 07 01 4574.3.

Using a graphical user interface (GUI) of the provisioning server, an affinity of each server towards each appliance may be defined. The affinity may take the values 0.0, 0.1, 0.2, ..., 1.0. Affinity in this context denotes the probability with which a given server should run a given appliance. For instance, saying that a group of servers X has an affinity of 0.5 to the "SAP on Windows Server 2003" appliance means that approximately half of the servers are meant to run the aforementioned appliance. For individual servers, e.g. saying that a given server 1 has an affinity of 0.5 to the "SAP on Windows Server 2003" appliance means that approximately half of the times the server is provisioned it will run the aforementioned appliance. In other words, every time the server is provisioned there is a 50% probability that it will run the aforementioned appliance.

The affinity concept provides a convenient way of balancing the size of the tiers without having to configure each server individually. The affinity values for a group of servers may be simply defined, and the system provisions each server. The case where an affinity value is 1.0 is exactly the same as the one where there are no affinities, and servers are statically configured to run a given appliance. In most cases, individual servers may be pinned to a specific appliance (i.e. affinity of 1.0) with all other affinities being 0.0, while in the case of groups of servers intermediate affinity probabilities will be used more elaborately.

This association of servers, appliances, and affinity values results in the creation of an appliance affinity table (AAT). Schematically, the AAT may look as follows:

| | SAP on Windows Server 2003 | Apache web server and MySQL on SUSE | Application server tier appliance | ... |
|---|---|---|---|---|
| Server 1 (MAC 00-13-A9-41-3C-D1) | 0.3 | 0.3 | 0.4 | |
| Server 2(MAC 00-13-A9-41-3C-F1) | 0.0 | 0.0 | 1.0 | |
| Server 3(MAC 00-13-A9-41-3D-13) | 0.8 | 0.0 | 0.2 | |
| Server group X | 0.5 | 0.5 | 0.0 | |
| (Server 1, Server 4, Server 5, Server 7, Server 10, Server 11, Server 12, Server 13) | | | | |
| ... | | | | |

The AATs can be used to define an initial functionality of servers, i.e. the first virtual machine appliance that will be deployed on them. A data centre administrator (or other suitably authorised and authenticated users) may deploy further virtual machines or virtual machine appliances onto the servers at later points in time outside the system described in this document.

AATs and all other information about servers and the appliances to be deployed on them is stored in a local database of the provisioning server. When conflicts occur (e.g. there is an entry in the AAT for server 1 on its own, and server 1 is also a member of group X) then the individual entry has precedence over the group entry.

### First embodiment

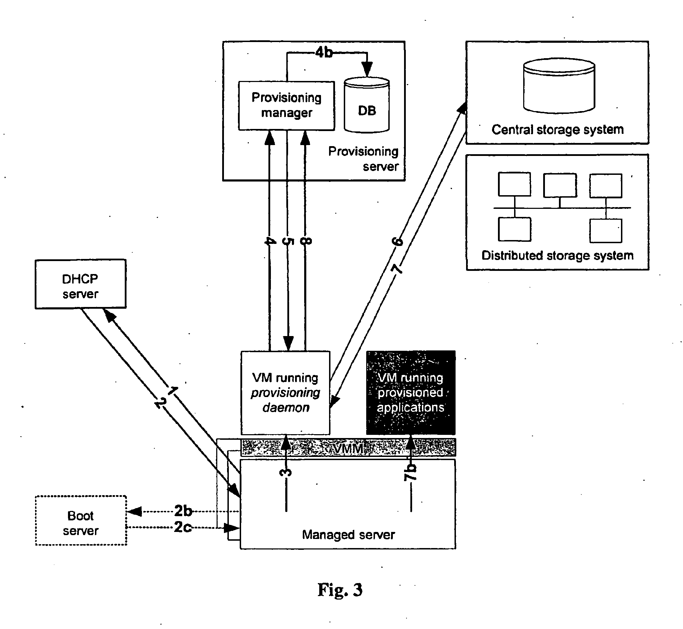

This preferred embodiment relates to provisioning of a new server. The operation of the system comprises the following steps, as shown Figure 3. The procedure described below applies to both an individual server and a group of servers (individual steps need to be repeated or performed in parallel for each server).

### Step A: Server configuration and bootstrapping

This is the step that occurs first when a server is connected to the network of the data centre, and switched on.

The server uses one of the following mechanisms in order to boot a bootable image for the first time: a) the combination of a DHCP and a boot server (e.g. PXE boot, based on TFTP) to boot from a remote bootable image, or b) a local bootable storage medium, e.g. a bootable CD, USB stick, or hard disk, that contains a local bootable image. The bootable image in both cases may contain:
- a Virtual Machine Monitor (VMM) e.g. Xen,
- the bootable root file system of a guest operating system (guest OS) distribution, e.g. SUSE Linux 10.2, which is to be started during the provisioning process in the privileged VM
- an operating system kernel needed for a guest operating system (guest OS), e.g. Linux 2.6.22,
- an initial RAM disk needed for a guest operating system
- a virtual machine configuration file (and parameters) needed to start a virtual machine running the above guest operating system
- a provisioning daemon application, configured to start automatically within the operating system distribution included in the root file system

In case a local bootable media is used, the server boots first from the local media. It starts the VMM (e.g. Xen), starts a Virtual Machine including a running guest operating system (e.g. Linux) inside the privileged VM (in Xen, "domain 0"), obtains the network configuration (i.e. IP address, gateway, netmask, etc.) of the Virtual Machine from an existing DHCP server (or any other type of network configuration infrastructure), and launches the provisioning daemon inside the privileged VM (operations 1,2 and 3 in Figure 3).

If a remote boot protocol is used (e.g. PXEboot), the server may use a remote boot server to obtain the bootable image to start the VMM and privileged VM (operations 2b and 2c in Figure 3). The mechanism in which the DHCP and PXEboot protocols work are commonly used in the technical field. Information can be found described at, e.g., http://en.wikipedia.org/wiki/DHCP and http://en.wikipediaorg/wiki/Preboot_Execution_Environment.

Whether local or remote methods are used to boot the server, it is generally advisable that measures are taken to protect the boot image from corruption, to ensure that the server can be rebooted without difficulties, e.g., should a system crash or power cut occur. For that reason, it is recommend that preferably read-only media are used, such as CD-ROMs, DVD-ROMs, or remote boot servers.

A person skilled in the art would realise that the boot server, provisioning server and the storage system may hosted on a same physical machine.

At the end of this step A, the following are running on the server that is being provisioned: a) the Virtual Machine Monitor, b) the privileged VM (running a guest OS), with the correct network configuration, and c) the provisioning daemon application running within the privileged VM.

### Step B: Automatic selection and deployment of VM appliance on the server

As described above, the provisioning server stores a plurality of VM appliance descriptors in a locally available database as well as affinities of servers towards certain VM appliances.

After a new server is connected and bootstrapped, the provisioning daemon running on the server contacts the provisioning manager of the provisioning server (operation 4 in Figure 3) over the network. In a secure environment (where both the server and the provisioning server are within a secure, firewalled network, where all parties are generally trusted) the server may not need to be authenticated by the provisioning server. In a non-secure environment, the server may need to be authenticated by the provisioning server. This may be achieved using, for instance, a one-time password issued to the server by the provisioning server in advance of the transaction using offline means. It may further be achieved using a certificate stored in the bootable media from which the server bootstraps. This is similarly to an authentication of web servers and clients as commonly used in the Information technology field. The authentication may be done by the provisioning server running the authentication service or another standalone server within the data centre..

After provisioning daemon running on the server contacts the provisioning manager, the provisioning manager looks up affinity information of the server in its AATs (step 4b). Based on that, it retrieves affinity values of the server for existing VM appliances, and determines which VM appliance is to be deployed on the server. This is done by considering each affinity value as a probability, and making a correspondingly probabilistic decision as to which appliance to deploy. For instance, in a case of Server 3, based on its AAT, out of the 10 times it gets connected to the network, the provisioning server will decide to deploy an SAP appliance 8 times and an application server tier appliance the remaining 2 times. This works similarly in server groups.

Once the VM appliance is selected, the provisioning manager proceeds to deploy the appliance to the server using, for example, the technology described in patent application EP 07 01 4574.3. This involves the following steps (corresponding to arrows in Figure 3):
- Step 5: the provisioning manager sends the VM appliance descriptor of the selected VM appliance to the server, along with a ticket that the server can use in order to download from central or distributed storage the configuration modules required to start a virtual machine from the selected VM appliance
- Step 6: the provisioning daemon requests the aforementioned downloads from the storage system (central or distributed) by providing a valid ticket
- Step 7: the needed configuration modules are downloaded to the server, and the corresponding virtual machine is started (step 7b)
- Step 8: the provisioning daemon reports that the virtual machine appliance has been successfully deployed (and the VM has been successfully started) on the server

At the end of this step B, the following are running on the server that is being provisioned: a) the Virtual Machine Monitor, b) the privileged VM, c) the provisioning daemon application running in the privileged VM, and d) the virtual machine that is running the applications the server is meant to be running (i.e. the server is provisioned).

For instance, at the end of this process a server is running a Web Server, a database, and PHP, alongside the management and provisioning software, and is ready to be used productively in the data centre.

### Second embodiment

This preferred embodiment relates to re-provisioning of a server when it needs to be moved to a different tier. The often onerous task of server re-provisioning (i.e. changing its functionality within.the data centre) becomes straightforward with this invention.

To move a server from one tier to another within the data centre, may comprise following steps:
- Modify the affinity value for the server that is to be re-provisioned in the AAT using the graphical user interface provided by the provisioning manager. Other tools such as a command-line tool or scripting tool may be also used. For instance, the affinity value of "apache web server" appliance of server 3 may be changed to 1.0, and all other affinity values of the same server may be changed to 0.0.
- Reboot the server. The process that will follow after rebooting the server has been described in the first preferred embodiment and will result in the newly selected appliance being up and running on the server.

Server-specific customisations to the file system provided by the appliance (e.g., additional file systems mounted by the server, and server-specific configuration of applications), if needed, can be handled using the copy-on-write techniques described in Kotsovinos, E., Moreton, T., Pratt, I., Ross, R., Fraser, K., Hand, S., and Harris, T. Global-Scale Service Deployment in the XenoServer Platform, In WORLDS (2004). These allow transparently merging of the appliance's unmodified file system with its customisations, which may be stored in a remote storage server.

Thus this preferred embodiment provides an easy, fast and controllable method of server re-provisioning, as associations of servers with the functionality they perform are held and centrally by the provisioning manager, thus it reduces complexity, increases transparency and accountability in the data centre.

### Third embodiment

This preferred embodiment relates to re-provisioning of a temporarily disconnected server. To ensure that a server may run the same application stack as before it got disconnected from the network for maintenance, i.e. it may be provisioned with the same virtual machine appliance, the affinity value of specific appliance of the server may be set to 1.0. This may be useful in some cases of temporary disconnection. This may be done through the GUI, command-line, or scripting interfaces of the provisioning manager.

After the server is reconnected and turned on, the process that will follow is the one that has been described in the first preferred embodiment, and will result in a selected appliances being up and running on the server.

Server-specific custom is at ions to the file system provided by the appliance, if needed, can be handled as explained in the second preferred embodiment, using Copy-on-Wnite techniques.

According to this embodiment, the method allows taking servers out of the data centre network (or switching them off) on demand, then bringing them back into the network, powering them on, an having applications deployed on them (as defined by their tier/affinities) quickly and automatically.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

## Claims

1. Method for automatic and remote provisioning of a server using virtual machine appliances being pre-configured instances of operating systems with pre-installed applications, the method comprising steps of:
a)
preparing a boot image and distributing it on a boot medium;
connecting the server to a network and bootstrapping the server using the distributed boot image;
b)
establishing a connection request by the server to a provisioning server over the network
retrieving an affinity information of the server for an existing virtual machine appliance in a predetermined appliance affinity table located on the provisioning server therein the affinity information defines initial functionalities of the server and is a value of the probability with which the server is assigned to run a certain appliance;
deploying the virtual machine appliance to the server according to the retrieved affinity information.

2. Method according to claim 1, wherein the boot image comprises:
a virtual machine monitor;
a bootable root file system of a guest operation system distribution;
an operating system kernel required for the guest operation system;
an initial RAM disk required for the guest operating system;
a virtual machine configuration information including parameters for starting up a virtual machine running the guest operating system;
a provisioning daemon application configured to start automatically within the operating system distribution included in the bootable root file system.

3. Method according to claim 1 or 2, wherein the boot medium is located on one of the following apparatus:
a boot server in a networked environment;
a storage medium connected locally to the server.

4. Method according to claim 1, 2 or 3, wherein the boot server uses DHCP and PXEboot as boot protocols for remote bootstrapping the server.

5. Method according to one of the preceding claims, wherein the connection request is being established by the provisioning daemon running on the server to a provisioning manager of the provisioning server.

6. Method according to one of the preceding claims, wherein the storage medium are CD-ROMs, DVD-ROMs or an attachable and detachable storage medium.

7. Method according to one of the preceding claims, wherein the server contacts provisioning server without an authentication, when both the server and the provisioning server are within a secure environment; and wherein the server contacts provisioning server with an authentication, when both the servers and the provisioning server are within a non-secure environment.

8. Method according to claim 7, wherein the authentication is an one time password issued to the server by the provisioning server.

9. Method according to claim 7, wherein the authentication uses a certificate stored within the boot image.

10. Method according to one of the preceding claims, wherein the affinity information defines initial functionalities of the server, and is a value of the probability with which the server is assigned to run a certain appliance.

11. Method according to one of the preceding claims, wherein the appliance affinity table comprises a plurality of affinity information sets for servers.

12. Method according to claims 10 or 11, wherein the affinity information within the affinity table can be modified using a user interface provided by the provisioning manager.

13. Method according to one of the preceding claims, wherein the step of deploying the server appliance comprises the steps of
sending a virtual machine descriptor of the selected virtual machine appliance including a ticket to the server; and downloading the virtual machine configuration information required to start a virtual machine from the selected appliance;
requesting the downloaded information and validating the ticket by the provisioning server;
starting up the corresponding virtual machine after the virtual machine configuration information are downloaded to the server,
reporting the status of successfully deploying of the virtual machine appliance on the server by the provisioning server.

14. Method according to one of the preceding claims, wherein following is running on the server which is being provisioned after step a) of claim 1:
the virtual machine monitor;
the privileged virtual machine with a specified network configuration; and
a provisioning daemon application running in the privileged virtual machine.

15. Method according to one of the preceding claims, wherein following is running on the server which is being provisioned after step b) of claim 1:
the virtual machine monitor;
the privileged virtual machine;
a provisioning daemon application running in the privileged virtual machine; and
the virtual machine hosting running applications.

16. Method according to one of the preceding claims, wherein the affinity information of the server needs to be modified prior to moving the server to an other tier, and rebooting the server for re-provisioning.

17. Method according to any one of claims 1 to 15, wherein the affinity information of the server needs to be modified prior to the server being shutdown for hardware maintenance, and rebooting the server for re-provisioning.

18. System for automatic and remote provisioning of a server using virtual machine appliances being pre-configured instances of operating systems with pre-installed applications the system comprising:
means for preparing a boot image and distributing it on a boot medium;
means for connecting the server to a network and bootstrapping the server using the distributed boot image;
means for establishing a connection request by the server to a provisioning server over the network;
means for retrieving an affinity information of the server for an existing virtual machine appliance in a predetermined appliance affinity table located on the provisioning server wherein the affinity information defines initial functionalities of the server and is a value of the probability with which the server is assigned to run a certain appliance;
means for deploying the virtual machine appliance to the server according to the retrieved affinity information.

## Patentansprüche

1. Verfahren zur automatischen Remote-Bereitstellung eines Servers mittels virtueller Maschinenappliances, welche vorkonfigurierte Betriebssysteminstanzen mit vorinstallierten Anwendungen darstellen, wobei das Verfahren die folgenden Schritte umfasst:
a) Erzeugen eines Bootimage und Verteilen desselben auf einem Bootmedium;
Verbinden des Servers mit einem Netzwerk und Bootstrappen des Servers mittels des verteilten Bootimage;
b) Aufbauen einer an einen Bereitstellungsserver gerichteten Verbindungsanfrage durch den Server über das Netzwerk;
Abrufen einer Affinitätsinformation des Servers für eine bestehende virtuelle Maschinenappliance in einer vorbestimmten Applianceaffinitätstabelle, die sich auf dem Bereitstellungsserver befindet, wobei die Affinitätsinformation Anfangsfunktionen des Servers definiert und einen Grad der Wahrscheinlichkeit darstellt, mit welcher dem Server die Ausführung einer bestimmten Appliance zugeteilt wird;
Stationieren der virtuellen Maschinenappliance auf dem Server in Entsprechung zu der abgerufenen Affinitätsinformation.

2. Verfahren nach Anspruch 1, wobei zu dem Bootimage gehören:
ein virtueller Maschinenmonitor;
ein bootbares Root-Dateisystem einer Gastbetriebssystemverteilung;
ein für das Gastbetriebssystem erforderlicher Betriebssystemkernel;
ein für das Gastbetriebssystem erforderliches anfängliches RAM-Laufwerk;
eine zur Konfiguration der virtuellen Maschine dienende Information, die Parameter zum Hochfahren einer virtuellen Maschine umfasst, auf der das Gastbetriebssystem läuft;
eine Bereitstellungs-Dämonanwendung, die dazu eingerichtet ist, automatisch innerhalb der Betriebssystemverteilung zu starten, die in dem bootbaren Root-Dateisystem enthalten ist.

3. Verfahren nach Anspruch 1 oder 2, wobei das Bootmedium auf einer der folgenden Vorrichtungen angeordnet ist:
auf einem in einer vernetzten Umgebung vorhandenen Bootserver;
auf einem lokal mit dem Server verbundenen Speichermedium.

4. Verfahren nach Anspruch 1, 2 oder 3, wobei der Bootserver DHCP und PXEboot als Bootprotokolle verwendet, um ein Remote-Bootstrappen des Servers durchzuführen.

5. Verfahren nach einem der vorhergehenden Ansprüche, wobei die Verbindungsanfrage von dem auf dem Server laufenden Bereitstellungsdämon an einen Bereitstellungsmanager des Bereitstellungsservers gerichtet aufgebaut wird.

6. Verfahren nach einem der vorhergehenden Ansprüche, wobei das Speichermedium CD-ROMs, DVD-ROMs oder ein anschließbares und entfernbares Speichermedium sind.

7. Verfahren nach einem der vorhergehenden Ansprüche, wobei der Server mit dem Bereitstellungsserver ohne Authentifizierung in Verbindung tritt, falls sich sowohl der Server als auch der Bereitstellungsserver in einer sicheren Umgebung befinden; und wobei der Server mit dem Bereitstellungsserver mit einer Authentifizierung in Verbindung tritt, wenn sich sowohl der Server als auch der Bereitstellungsserver in einer nicht sicheren Umgebung befinden.

8. Verfahren nach Anspruch 7, wobei die Authentifizierung ein Einmalpasswort ist, das von dem Bereitstellungsserver an den Server ausgegeben wird.

9. Verfahren nach Anspruch 7, wobei die Authentifizierung ein Zertifikat verwendet, das in dem Bootimage gespeichert ist.

10. Verfahren nach einem der vorhergehenden Ansprüche, wobei die Affinitätsinformation Anfangsfunktionen des Servers definiert und einen Grad der Wahrscheinlichkeit darstellt, mit welcher dem Server die Ausführung einer bestimmten Appliance zugeteilt wird.

11. Verfahren nach einem der vorhergehenden Ansprüche, wobei die Applianceaffinitätstabelle mehrere Sätze an Affinitätsinformation für Server enthält.

12. Verfahren nach Anspruch 10 oder 11, wobei die Affinitätsinformation in der Affinitätstabelle mittels einer Benutzerschnittstelle modifiziert werden kann, die durch den Bereitstellungsmanager bereitgestellt wird.

13. Verfahren nach einem der vorhergehenden Ansprüche, wobei der Schritt der Stationierung der Serverappliance die Schritte umfasst:
Übertragen eines virtuellen Maschinendeskriptors der ausgewählten virtuellen Maschinenappliance inklusive einer Zugangsserlaubnis zu dem Server; und
Herunterladen der zur Konfiguration der virtuellen Maschine dienenden und für den Start einer virtuellen Maschine erforderlichen Information von der ausgewählten Appliance;
Anfordern der heruntergeladenen Information und Überprüfen der Zugangserlaubnis durch den Bereitstellungsserver;
Hochfahren der entsprechenden virtuellen Maschine, nachdem die zur Konfiguration der virtuellen Maschine dienende Information auf den Server heruntergeladen ist;
Melden des Status einer erfolgreichen Stationierung der virtuellen Maschinenappliance auf dem Server durch den Bereitstellungsserver.

14. Verfahren nach einem der vorhergehenden Ansprüche, wobei nach dem Schritt a) in Anspruch 1 folgende Programme auf dem Server laufen, an den eine Bereitstellung erfolgt:
der virtuelle Maschinenmonitor;
die bevorzugte virtuelle Maschine, die eine spezifizierte Netzwerkkonfiguration aufweist; und
eine Bereitstellungs-Dämonanwendung, die in der bevorzugten virtuellen Maschine läuft.

15. Verfahren nach einem der vorhergehenden Ansprüche, wobei nach dem Schritt b) in Anspruch 1 folgende Programme auf dem Server laufen, an den eine Bereitstellung erfolgt:
der virtuelle Maschinenmonitor;
die bevorzugte virtuelle Maschine;
eine Bereitstellungs-Dämonanwendung, die in der bevorzugten virtuellen Maschine läuft; und
die virtuelle Maschine, die laufende Anwendungen beherbergt.

16. Verfahren nach einem der vorhergehenden Ansprüche, wobei die Affinitätsinformation des Servers modifiziert werden muss, bevor der Server in eine weitere Schicht verlegt wird, und bevor ein Neubooten des Servers für eine erneute Bereitstellung durchgeführt wird.

17. Verfahren nach einem der Ansprüche 1 bis 15, wobei die Affinitätsinformation des Servers modifiziert werden muss, bevor der Server für eine Hardwarewartung heruntergefahren wird, und bevor ein Neubooten des Servers für eine erneute Bereitstellung durchgeführt wird.

18. System für die automatische Remote-Bereitstellung eines Servers mittels virtueller Maschinenappliances, die auf vorkonfigurierten Betriebssysteminstanzen mit vorinstallierten Anwendungen basieren, wobei das System umfasst:
Mittel zum Erzeugen eines Bootimage und Verteilen desselben auf einem Bootmedium;
Mittel zum Verbinden des Servers mit einem Netzwerk und Bootstrappen des Servers mittels des verteilten Bootimage;
Mittel zum Aufbauen einer an einen Bereitstellungsserver gerichteten Verbindungsanfrage durch den Server über das Netzwerk;
Mittel zum Abrufen einer Affinitätsinformation des Servers für eine bestehende virtuelle Maschinenappliance in einer vorbestimmten Applianceaffinitätstabelle, die sich auf dem Bereitstellungsserver befindet, wobei die Affinitätsinformation Anfangsfunktionen des Servers definiert und einen Grad der Wahrscheinlichkeit darstellt, mit welcher dem Server die Ausführung einer bestimmten Appliance zugeteilt wird;
Mittel zum Stationieren der virtuellen Maschinenappliance auf dem Server in Entsprechung zu der abgerufenen Affinitätsinformation.

## Revendications

1. Méthode de provisionnement automatique et à distance d'un serveur en utilisant des appliances de machine virtuelle qui sont des instances préconfigurées de systèmes d'exploitation avec des applications préinstallées, la méthode comprenant les étapes consistant à :
a) préparer une image de démarrage et la distribuer sur un support de démarrage ;
relier le serveur à un réseau et amorcer le serveur en utilisant l'image de démarrage distribuée ;
b) établir une demande de connexion par le serveur à un serveur de provisionnement sur le réseau ;
récupérer une information d'affinité du serveur pour une appliance de machine virtuelle existante dans une table d'affinités d'appliances prédéterminée située sur le serveur de provisionnement, dans laquelle l'information d'affinité définit des fonctionnalités initiales du serveur et est une valeur de la probabilité avec laquelle le serveur est affecté pour exécuter une certaine appliance ;
déployer l'appliance de machine virtuelle sur le serveur selon l'information d'affinité récupérée.

2. Méthode selon la revendication 1, dans laquelle l'image de démarrage comprend :
un moniteur de machine virtuelle ;
un système de fichiers racine démarrable d'une distribution de système d'exploitation hôte ;
un noyau de système d'exploitation requis pour le système d'exploitation hôte ;
un disque RAM initial requis pour le système d'exploitation hôte ;
des informations de configuration de machine virtuelle comprenant des paramètres pour démarrer une machine virtuelle faisant tourner le système d'exploitation hôte ;
une application démon de provisionnement configurée pour démarrer automatiquement dans la distribution de système d'exploitation comprise dans le système de fichiers racine démarrable.

3. Méthode selon la revendication 1 ou 2, dans laquelle le support de démarrage est situé sur l'un des appareils suivants :
un serveur de démarrage dans un environnement réseau ;
un support de stockage relié localement au serveur.

4. Méthode selon la revendication 1, 2 ou 3, dans laquelle le serveur de démarrage utilise le DHCP et le PXEboot comme protocoles de démarrage pour amorcer le serveur à distance.

5. Méthode selon l'une quelconque des revendications précédentes, dans laquelle la demande de connexion est établie par le démon de provisionnement tournant sur le serveur à un gestionnaire de provisionnement du serveur de provisionnement.

6. Méthode selon l'une quelconque des revendications précédentes, dans laquelle les supports de stockage sont des CD-ROM, des DVD-ROM ou un support de stockage connectable et déconnectable.

7. Méthode selon l'une quelconque des revendications précédentes, dans laquelle le serveur contacte le serveur de provisionnement sans authentification lorsqu'à la fois le serveur et le serveur de provisionnement sont dans un environnement sécurisé, et dans laquelle le serveur contacte le serveur de provisionnement avec une authentification lorsqu'à la fois le serveur et le serveur de provisionnement sont dans un environnement non sécurisé.

8. Méthode selon la revendication 7, dans laquelle l'authentification est un mot de passe à usage unique délivré au serveur par le serveur de provisionnement.

9. Méthode selon la revendication 7, dans laquelle l'authentification utilise un certificat stocké au sein de l'image de démarrage.

10. Méthode selon l'une quelconque des revendications précédentes, dans laquelle l'information d'affinité définit des fonctionnalités initiales du serveur et est une valeur de la probabilité avec laquelle le serveur est affecté pour exécuter une certaine appliance.

11. Méthode selon l'une quelconque des revendications précédentes, dans laquelle la table d'affinités d'appliances comprend une pluralité d'ensembles d'informations d'affinités pour les serveurs.

12. Méthode selon la revendication 10 ou 11, dans laquelle les informations d'affinités dans la table d'affinités peuvent être modifiées en utilisant une interface utilisateur fournie par le gestionnaire de provisionnement.

13. Méthode selon l'une quelconque des revendications précédentes, dans laquelle l'étape de déploiement de l'appliance de serveur comprend les étapes consistant à :
envoyer un descripteur de machine virtuelle de l'appliance de machine virtuelle sélectionnée comprenant un ticket au serveur, et télécharger les informations de configuration de machine virtuelle requises pour démarrer une machine virtuelle à partir de l'appliance sélectionnée ;
demander les informations téléchargées et valider le ticket par le serveur de provisionnement ;
démarrer la machine virtuelle correspondante une fois que les informations de configuration de machine virtuelle ont été téléchargées sur le serveur ;
rapporter l'état du déploiement réussi de l'appliance de machine virtuelle sur le serveur par le serveur de provisionnement.

14. Méthode selon l'une quelconque des revendications précédentes, dans laquelle les éléments suivants tournent sur le serveur qui est provisionné après l'étape a) de la revendication 1 :
le moniteur de machine virtuelle ;
la machine virtuelle privilégiée avec une configuration réseau spécifiée ; et
une application démon de provisionnement tournant dans la machine virtuelle privilégiée.

15. Méthode selon l'une quelconque des revendications précédentes, dans laquelle les éléments suivants tournent sur le serveur qui est provisionné après l'étape b) de la revendication 1 ;
le moniteur de machine virtuelle ;
la machine virtuelle privilégiée ;
une application démon de provisionnement tournant dans la machine virtuelle privilégiée ; et
la machine virtuelle hébergeant les applications en cours d'exécution.

16. Méthode selon l'une quelconque des revendications précédentes, dans laquelle l'information d'affinité du serveur doit être modifiée avant de déplacer le serveur vers un autre niveau et de redémarrer le serveur pour le reprovisionnement.

17. Méthode selon l'une quelconque des revendications 1 à 15, dans laquelle l'information d'affinité du serveur doit être modifiée avant d'arrêter le serveur pour une maintenance du matériel et de redémarrer le serveur pour le reprovisionnement.

18. Système de provisionnement automatique et à distance d'un serveur en utilisant des appliances de machine virtuelle qui sont des instances préconfigurées de systèmes d'exploitation avec des applications préinstallées, le système comprenant :
un moyen pour préparer une image de démarrage et la distribuer sur un support de démarrage ;
un moyen pour relier le serveur à un réseau et amorcer le serveur en utilisant l'image de démarrage distribuée ;
un moyen pour établir une demande de connexion par le serveur à un serveur de provisionnement sur le réseau ;
un moyen pour récupérer une information d'affinité du serveur pour une appliance de machine virtuelle existante dans une table d'affinités d'appliances prédéterminée située sur le serveur de provisionnement, dans lequel l'information d'affinité définit des fonctionnalités initiales du serveur et est une valeur de la probabilité avec laquelle le serveur est affecté pour exécuter une certaine appliance ;
un moyen pour déployer l'appliance de machine virtuelle sur le serveur selon l'information d'affinité récupérée.
